# EUROPEAN PATENT SPECIFICATION

(11) **EP 3 125 531 B1**
(45) Date of publication and mention of the grant of the patent: **04.05.2022**
(21) Application number: 16165461.1
(22) Date of filing: 15.04.2016
(51) Int. Cl.: H04N 5/232, G06F 3/01, G06F 3/0488

(54) **CONTROL METHOD AND DEVICE FOR ADJUSTING SHOOTING FUNCTION**
STEUERUNGSVERFAHREN UND -VORRICHTUNG ZUR EINSTELLUNG EINER AUFNAHMEFUNKTION
PROCÉDÉ ET DISPOSITIF DE COMMANDE POUR RÉGLER UNE FONCTION DE PRISE DE VUE

(30) Priority: 31.07.2015 CN 201510462838
(43) Date of publication of application: 01.02.2017
(73) Proprietor: Xiaomi Inc., Beijing 100085 (CN)
(72) Inventor: XIANGLI, Fei, 100085 BEIJING (CN); QIAN, Zhuang, 100085 BEIJING (CN); CHEN, Baoke, 100085 BEIJING (CN)
(74) Representative: Cabinet Beau de Loménie

(56) References cited:
- EP-A2- 2 693 737
- EP-A2- 2 728 853
- WO-A1-2014/054249
- US-A1- 2011 249 074
- Samsung: "Samsung GT-I9195 User Manual", , 20 June 2013 (2013-06-20), XP55684950, Retrieved from the Internet: URL:http://downloadcenter.samsung.com/cont ent/UM/201306/20130621151302859/GT-I9195_U M_EU_Jellybean_Eng_Rev.1.0_130620.pdf [retrieved on 2020-04-09]

## Description

### TECHNICAL FIELD

The present invention relates to a technical field of signal control, and more particularly, to a control method and device apparatus for adjusting a shooting function.

### BACKGROUND

With the popularity of smart phones, a built-in shooting function of the smart phones has been widely accepted and becomes one of the most important functions of the smart phones. During shooting, a user often encounters such a situation where it is necessary to manually switch a front camera or a rear camera for different shooting objects.

Document EP 2 693 737 discloses an image processing method and apparatus. Document WO 2014/054249 discloses an information processing method and apparatus. Document EP 2 728 853 discloses a method and a device for controlling a camera. Document US2011/249074 discloses switching the camera of a dual camera device. Document XP55684950 discloses a user manual of Samsung GT-I9195.

### SUMMARY

In order to overcome the problems that exist in the prior art, embodiments of the present invention provide a control method, a device and an apparatus for adjusting a shooting function. The technical solution is as below:
According to a first aspect, the invention relates to a method for adjusting a shooting function as defined in independent claim 1.

In a particular embodiment, if the element is a camera, the step of switching an operation status of an element in the shooting application according to preset control information comprises:
switching the operation status of the camera into front camera shooting or rear camera shooting according to the preset control information.

In a particular embodiment, if the element is a flashing light, the step of switching an operation status of an element in the shooting application according to preset control information comprises:
switching the operation status of the flashing light into ON, OFF, or AUTO according to preset control information.

In a particular embodiment, if the element is a front camera, the step of switching an operation status of an element in the shooting application according to preset control information comprises:
switching the operation status of the front camera into photo shooting or video shooting according to the preset control information.

In a particular embodiment, if the element is a rear camera, the step of switching an operation status of an element in the shooting application according to preset control information comprises:
switching the operation status of the rear camera into photo shooting or video shooting according to the preset control information.

According to a second aspect, the invention relates to a control device for adjusting a shooting function as set out in independent claim 6.

In a particular embodiment, if the element is a camera, the control module is configured to perform:
a switching of the operation status of the camera into front camera shooting or rear camera shooting according to the preset control information.

In a particular embodiment, if the element is a flashing light the control module is configured to perform:
a switching of the operation status of the flashing light into ON, OFF, or AUTO according to preset control information.

In a particular embodiment, if the element is a front camera, the control module is configured to perform:
a switching of the operation status of the front camera into photo shooting or video shooting according to the preset control information.

In a particular embodiment, if the element is a rear camera, the control module is configured to perform:
a switching of the operation status of the rear camera into photo shooting or video shooting according to the preset control information.

It is to be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments and, together with the description, serve to explain the principles of the present invention.
Fig. 1 is a flow chart illustrating a control method for adjusting a shooting function according to an exemplary embodiment.
Fig. 2 is a flow chart illustrating a control method for adjusting a shooting function according to the invention.
Fig. 3 is a schematic diagram of a touch control region on the display screen of a terminal device according to the invention.
Fig. 4 is a flow chart illustrating a control method for adjusting a shooting function according to another exemplary embodiment.
Fig. 5 is a schematic diagram of a plurality of touch control regions on the display screen of a terminal apparatus.
Fig. 6 is a block diagram of a control device for adjusting a shooting function according to an exemplary embodiment.
Fig. 7 is a block diagram of a control device for adjusting a shooting function according to the invention.
Fig. 8 is a block diagram of a control device for adjusting a shooting function according to another exemplary embodiment.
Fig. 9 is a block diagram of a terminal apparatus with a shooting function according to an exemplary embodiment.
Fig. 10 is a block diagram of a terminal apparatus with a shooting function according to an exemplary embodiment.

Particular embodiments have been illustrated in the above drawings and will be described in further detail hereinafter. The drawings and written descriptions are not intended to limit the scope of the disclosed concept in any way, rather, they are provided to explain the concept of the present invention to those skilled in the art by referring to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented.

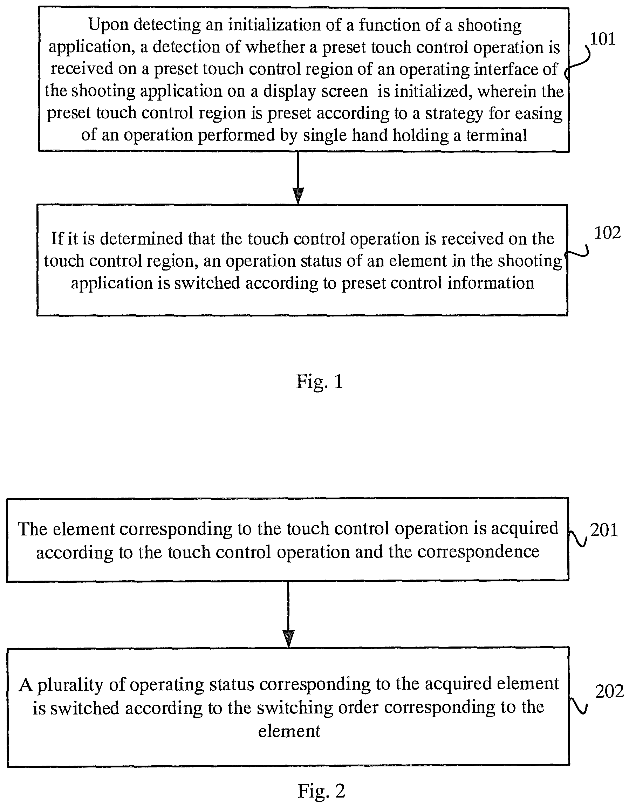

Fig. 1 is a flow chart of a control method for adjusting a shooting function, according to an exemplary embodiment. The method may include the following steps.

In step 101, upon detecting an initialization of a function of a shooting application, a detection of whether a preset touch control operation is received on a preset touch control region of an operating interface of the shooting application on a display screen is initialized, the preset touch control region being preset according to a strategy for easing an operation performed by a single hand holding a terminal.

In the present embodiment, an implementation process is described in detail that the control method for adjusting a shooting function shall be performed by a control device for adjusting a shooting function incorporated in a terminal apparatus with a shooting function. For example, the terminal apparatus with a shooting function includes: a cell phone and a personal portable computer with cameras, a camera or a video camera.

A touch control region for switching an operation status of an element in the shooting application is preset on the display screen of the terminal apparatus with a shooting function. The touch control region is positioned at such a location on the display screen of the terminal apparatus to facilitate the user to make a touch control operation during a single hand holding shooting. For example, the touch control region may be a right side region along the vertical direction of the display screen, or the touch control region may be a left side region along the vertical direction of the display screen, or the touch control region may be a lower side region along the horizontal direction of the display screen. The particular position of the touch control region may be determined according to actual requirements of the application, which is not limited to the present embodiment.

The detailed operation principle that the control device for adjusting a shooting function detects the preset touch control region and determines whether a touch control operation is received lies in: if the display screen of the terminal apparatus is a touch control screen based on capacitive sensing, a capacitor, generally having an induced capacitance of several pF to several tens of pF, may be formed between the touch control screen and the ground when the user's finger touches the touch control screen, with the user equivalent to a conductor connected to the ground. Accordingly, it may be detected whether the user touches the touch control screen based on such a change of the capacitance and an internal timer. When it is determined that the inductive button on the capacitive sensor is pressed, a touch control operation is transmitted that includes an identifier of a general input/output interface GPIO, such that a preset location information table may be looked up based on the identifier of the GPIO to obtain a location information of the touch control region corresponding to the identifier of the GPIO. Accordingly, it can be determined whether the user is performing a touch control operation on the touch control region.

In detail, after determining that a touch control operation is received in the touch control region, an operation principle that the control device for adjusting a shooting function determines whether a touch control operation is the preset touch control operation lies in: acquiring a changing trend according to the touch control operation received during a preset time; calculating a precise current location of the center of the finger using a interpolation algorithm; converting the change of the location, i.e., a slide direction and distance of the finger, into input information of the user; and acquiring the touch control operation of the user in the touch control region. In one embodiment, the touch control operation includes: single finger tapping, multi-finger tapping, double click, single finger sliding, and/or multi-finger sliding.

In step 102, if it is determined that the touch control operation is received on the touch control region, an operation status of an element in the shooting application is switched according to preset control information.

If it is determined that the touch control operation is received on the touch control region, the control device for adjusting a shooting function switches the operation status of an element in the shooting application according to preset control information.

Those skilled in the art should appreciate that the element in the shooting application includes a flashing light and a camera according to the invention. For example, if the element is a flashing light, the operation status corresponding to the flashing light includes ON, OFF, AUTO, and the like. If the element is a camera, the operation status corresponding to the camera includes front camera shooting and rear camera shooting. If the element is a front camera, the operation status corresponding to the front camera includes photo shooting or video shooting. If the element is a rear camera, the operation status corresponding to the rear camera includes photo shooting or video shooting.

An example is taken as follow.

During a shooting in which a current operation status of the camera is rear camera shooting status, if a self-shooting is required, the user applies a touch control operation on a preset touch control region easy for operation, and the operation status of the camera is switched from rear camera shooting status to a front camera shooting status according to the touch control operation.

To sum up, in the control method for adjusting a shooting function, a touch control region is preset on the display screen with a shooting function, it is detected whether a preset control operation is received on the preset touch control region on the display screen. If it is determined that the touch control operation is received on the touch control region, then an operation status of the element in the shooting application is switched according to preset control information. Accordingly, the user controls the touch control region that is easy for touch controls during the shooting, which therefore realizes a convenient switch of the operation status of the element currently under control and improvement of shooting efficiency and shooting quality.

One , as according to the invention, or more touch control regions may be provided in the embodiment illustrated in Fig. 1. Different arrangements of the touch control region may correspond to different control information, and the analyzing processes of the acquired touch control operation of the control device for adjusting a shooting function may be different. In order to further describe the process of switching among a plurality of operation status of the element according to the preset control information, a detailed description is provided by referring to Figs. 2 to 5 as follows.

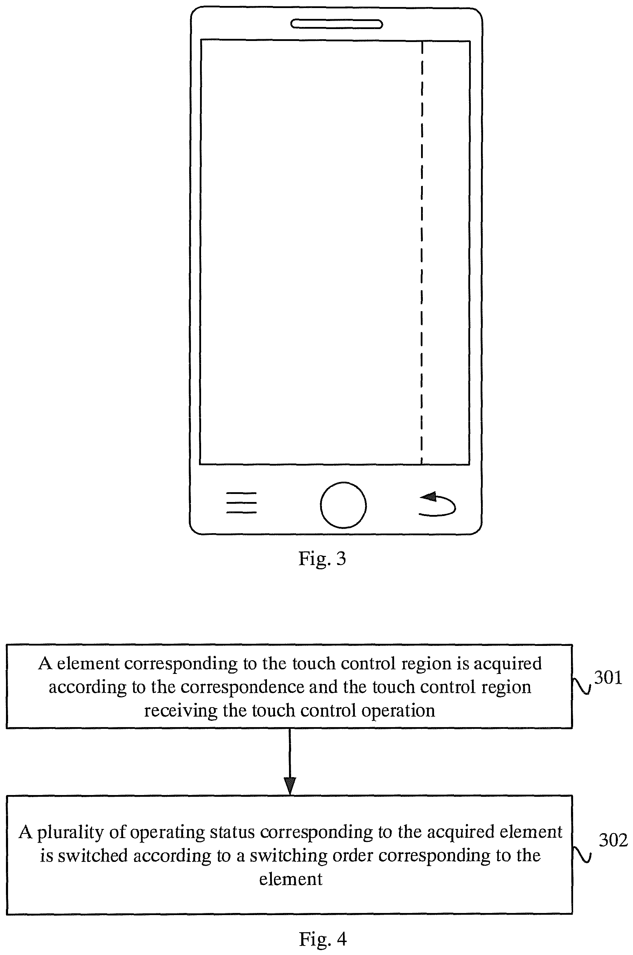

Fig. 2 is a flow chart illustrating a control method for adjusting a shooting function according to the invention. The present embodiment corresponds to a scenario wherein there is one touch control region, as shown in Fig. 3 for example, which is a schematic diagram of a touch control region on the display screen of the terminal device.

The touch control information according to the present embodiment includes: a correspondence between the touch control operation and the element and a switching order corresponding to the plurality of operation status of the element. Accordingly, with respect to the step 102 of the embodiment illustrated in Fig. 1, the detailed process for switching the operation status of the element in the shooting application according to the preset control information after it is determined that the touch control operation is received in the touch control region may include the steps as follow.

In step 201, an element corresponding to the touch control operation is acquired according to the correspondence and the touch control operation.

A preset correspondence in the control information is inquired to obtain the element corresponding to the touch control operation. For example, a double click corresponds to the camera, and a single finger sliding corresponds to the flashing light.

In step 202, a plurality of operation status corresponding to the acquired element is switched according to a switching order corresponding to the element.

A preset switching order in the control information is inquired to obtain the switching order corresponding to the current element, and the plurality of operation status corresponding to the element is switched.

In order to describe the above implementation in further detail, an example is taken as follow.

In the present embodiment, the control information includes: a double click touch control operation corresponds to the camera, and a single finger sliding touch control operation corresponds to the flashing light; and the switching order corresponding to the camera is "front camera shooting-rear camera shooting", and the switching order corresponding to the flashing light is "ON-OFF-AUTO".

Upon detection of the touch control operation of the user on the touch control region, if it is determined that the touch control operation is a double click, the camera is determined as the element currently under control (the acquired element); and if the current operation status of the camera is front camera shooting, it is switched to rear camera shooting according to the switching order "front camera shooting-rear camera shooting" corresponding to the camera.

To sum up, in the control method for adjusting a shooting function provided in the present application, when the preset touch control operation is detected in a preset touch control region, the plurality of operation status corresponding to the element is switched according to the correspondence between the touch control operation and the element and the switching order corresponding to the element in the control information. Accordingly, the user controls the touch control region that is easy for touch controls during the shooting, which therefore realizes a convenient switch among various operation status of the element currently under control and improves the shooting efficiency and the shooting quality. Furthermore, a customized service may be provided according to the touch control habits of the user, thereby improving the user experience.

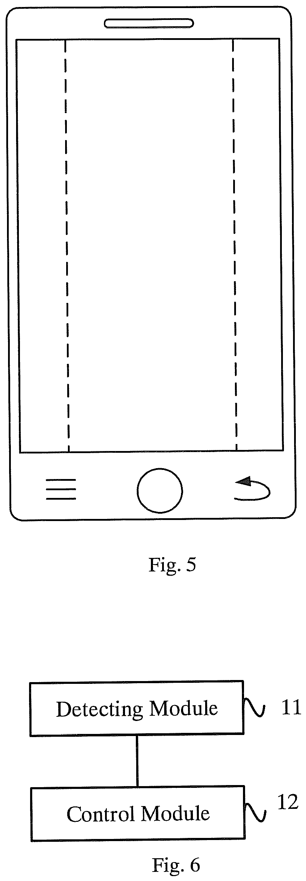

Fig. 4 is a flow chart illustrating a control method for adjusting a shooting function according to another exemplary embodiment. The present embodiment corresponds to a scenario wherein there is a plurality of touch control regions, as shown in Fig. 5 for example, which is a schematic diagram of a plurality of touch control regions on the display screen of a terminal apparatus.

The touch control information according to the present embodiment includes: a correspondence between the touch control operation in each control region and the element and a switching order corresponding to the plurality of operation status of the element. Accordingly, with respect to the step 102 of the embodiment illustrated in Fig. 1, the detailed process for switching the operation status of the element in the shooting application according to the preset control information after it is determined that the touch control operation is received in the touch control region may include the steps as follow.

In step 301, an element corresponding to the touch control region is acquired according to the correspondence and the touch control region receiving the touch control operation.

In particular, the detailed operation principle of the control device for adjusting a shooting function detecting the touch control region corresponding to the touch control is: when the display screen of the terminal apparatus is, for example, a touch control screen based on capacitive sensing, a capacitor, generally having a induced capacitance of several pF to several tens of pF, may be formed between the touch control screen and the ground when the user's finger touches the touch control screen as the user may correspond to a capacitor connected to the ground. Accordingly, it may be detected whether the user touches the touch control screen based on such a change of the capacitance and an internal timer. When it is determined that the inductive button on the capacitive sensor is pressed, a transmitted touch control operation includes an identifier of a general input/output interface GPIO, such that a preset location information table may be looked up based on the identifier of the GPIO to obtain a location information of the touch control region corresponding to the identifier of the GPIO. Accordingly, the touch control region corresponding to the touch control operation may be determined.

The element corresponding to the touch control region may be obtained according to the touch control region receiving the touch control operation, and based on the correspondence between the touch control operation in each touch control region and the element preset in the control information.

In step 302, a plurality of operation status corresponding to the acquired element is switched according to a switching order corresponding to the element.

A switching order corresponding to the current element is inquired, and the plurality of operation status corresponding to the element is switched according to the switching order corresponding to the element in the control information.

In order to describe the above implementation in further detail, an example is taken as follow.

In the present embodiment, the touch control region includes a left side region and a right side region.

The preset control information includes: a double click touch control operation on the left side region corresponds to the camera, and the switching order corresponding to the camera is "front camera shooting-rear camera shooting"; and a single finger sliding touch control operation on the right side region corresponds to the flashing light, and the switching order corresponding to the flashing light is "ON-OFF-AUTO".

Upon detection of a double click touch control operation on the left side region of the user, the camera is determined as the element currently under control (the acquired element); and if the current operation status of the camera is front camera shooting, it is switched to rear camera shooting according to the switching order "front camera shooting-rear camera shooting" corresponding to the camera.

To sum up, in the control method for adjusting a shooting function provided in the present application, when the preset touch control operation is detected in the preset plurality of touch control regions, the plurality of operation status corresponding to the element is switched according to the correspondence between the touch control operation in each touch control region and the element and the switching order corresponding to the element in the control information. Accordingly, the user controls the touch control region that is easy for touch controls during the shooting, which therefore realizes a convenient switch of the operation status of the element currently under control and improves the shooting efficiency and the shooting quality. Furthermore, a customized service may be provided according to the touch control habits of the user, thereby improving the user experience.

Fig. 6 is a block diagram of a control device for adjusting a shooting function illustrated according to an exemplary embodiment. The control device for adjusting a shooting function may be implemented by software, hardware or a combination of the both. The control device for adjusting a shooting function may include the components as follow.

A detecting module 11 which is configured to, upon detecting an initialization of a function of a shooting application, initialize a detection of whether a preset touch control operation is received on a preset touch control region of an operating interface of the shooting application on a display screen, the preset touch control region being preset according to a strategy for easing an operation performed by a single hand holding a terminal.

A control module 12 which is configured to switch an operation status of an element in the shooting application according to preset control information, if it is determined that the touch control operation is received in the touch control region.

To sum up, in the control method for adjusting a shooting function, a touch control region is preset on the display screen with a shooting function, it is detected whether a preset control operation is received on the preset touch control region on the display screen. If it is determined that the touch control operation is received on the touch control region, then an operation status of the element in the shooting application is switched according to preset control information. Accordingly, the user controls the touch control region that is easy for touch controls during the shooting, which therefore realizes a convenient switch of the operation status of the element currently under control and improves the shooting efficiency and the shooting quality.

In the control device for adjusting a shooting function provided according to an exemplary embodiment, the touch control operation includes but is not limited to single finger tapping, multi-finger tapping, double click, single finger sliding, and/or multi-finger sliding.

The touch control region includes but is not limited to a left side region of the display screen, a right side region of the display screen, and/or a lower side region of the display screen.

If the element is a camera, the control module is configured to perform: a switching of the operation status of the camera into front camera shooting or rear camera shooting according to the preset control information.

If the element is a flashing light, the control module is configured to perform: a switching of the operation status of the flashing light into ON, OFF, or AUTO according to preset control information.

If the element is a front camera, the control module is configured to perform: a switching of the operation status of the front camera into photo shooting or video shooting according to the preset control information.

If the element is a rear camera, the control module is configured to perform: a switching of the operation status of the rear camera into photo shooting or video shooting according to the preset control information.

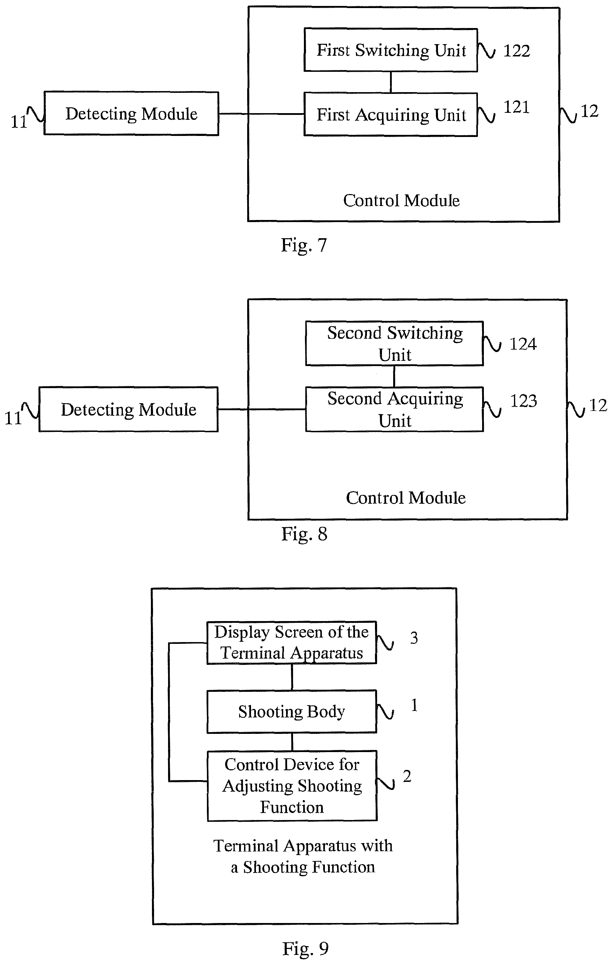

Fig. 7 is a block diagram of a control device for adjusting a shooting function illustrated according to the invention.

On the basis of the embodiment illustrated in Fig. 6, as illustrated in Fig. 7, the control device for adjusting a shooting function may be implemented by software, hardware or a combination of the both.

If the touch control region includes one region,
the control information includes: a correspondence between the touch control operation and the element, and a switching order corresponding to a plurality of operation status of the element; and
the control module 12 includes:
   a first acquiring unit 121, configured to acquire the element corresponding to the touch control operation according to the touch control operation and the correspondence; and
   a first switching unit 122, configured to switch among the plurality of operation status corresponding to the acquired element according to the switching order corresponding to the element.

To sum up, in the control method for adjusting a shooting function provided in the present application, when the preset touch control operation is detected in a preset touch control region, the plurality of operation status corresponding to the element is switched according to the correspondence between the touch control operation and the element and the switching order corresponding to the element in the control information. Accordingly, the user controls the touch control region that is easy for touch controls during the shooting, which therefore realizes a convenient switch of the operation status of the element currently under control and improves the shooting efficiency and the shooting quality. Furthermore, a customized service may be provided according to the touch control habits of the user, thereby improving the user experience.

Fig. 8 is a block diagram of a control device for adjusting a shooting function illustrated according to an exemplary embodiment. On the basis of the embodiment illustrated in Fig. 6, as illustrated in Fig. 8, the control device for adjusting a shooting function may be implemented by software, hardware or a combination of the both.

If the touch control region includes a plurality of touch control regions,
the control information includes: a correspondence between the touch control operation in each touch control region and the element, and a switching order corresponding to a plurality of operation status of the element; and
the control module 12 includes:
   a second acquiring unit 123, configured to acquire the element corresponding to the touch control region according to the touch control operation received in the touch control region and the correspondence; and
   a second switching unit 124, configured to switch among the plurality of operation status corresponding to the element according to the switching order corresponding to the element.

To sum up, in the control method for adjusting a shooting function provided in the present application, when the preset touch control operation is detected in a preset touch control region, the plurality of operation status corresponding to the element is switched according to the correspondence between the touch control operation and the element and the switching order corresponding to the element in the control information. Accordingly, the user controls the touch control region that is easy for touch controls during the shooting, which therefore realizes a convenient switch of the operation status of the element currently under control and improves the shooting efficiency and shooting quality. Furthermore, a customized service may be provided according to the touch control habits of the user, thereby improving the user experience.

Fig. 9 is a block diagram of a terminal apparatus with a shooting function illustrated according to an exemplary embodiment. As illustrated in Fig. 9, the apparatus includes: a shooting body 1, a control device 2 for adjusting a shooting function provided in the above embodiments of the present invention, and a display screen 3 of the terminal apparatus.

In one embodiment, the terminal apparatus includes a cellphone, a camera, a video camera and a personal palm computer.

In one embodiment, the shooting body 1 includes a flashing light and/or a camera, etc.

To sum up, in the control method for adjusting a shooting function, a touch control region is preset on the display screen with a shooting function, it is detected whether a preset control operation is received on the preset touch control region on the display screen. If it is determined that the touch control operation is received on the touch control region, then operation status of the element in the shooting application is switched according to preset control information. Accordingly, the user controls the touch control region that is easy for touch controls during the shooting, which therefore realizes a convenient switch of the operation status of the element currently under control and improves the shooting efficiency and the shooting quality.

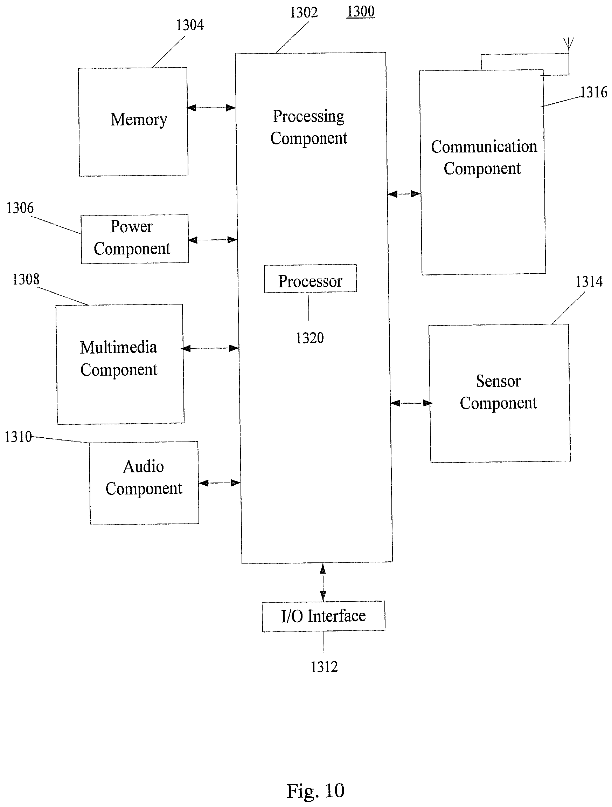

Fig. 10 is a block diagram of a terminal apparatus 1300 with a shooting function according to an exemplary embodiment. For example, the apparatus 1300 may be a mobile phone, a computer, a digital broadcast terminal, a messaging device, a gaming console, a tablet, a medical device, exercise equipment, a personal digital assistant, and the like.

Referring to Fig. 10, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the apparatus 1300. Examples of such data include instructions for any applications or methods operated on the apparatus 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the apparatus 1300. The power component 1306 may include a power management system, one or more power sources, and any other components associated with the generation, management, and distribution of power in the apparatus 1300.

The multimedia component 1308 includes a screen providing an output interface between the apparatus 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum while the apparatus 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the apparatus 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the apparatus 1300. For instance, the sensor component 1314 may detect an open/closed status of the apparatus 1300, relative positioning of components, e.g., the display and the keypad, of the apparatus 1300, a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the apparatus 1300 and other devices. The apparatus 1300 can access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1304, executable by the processor 1320 in the apparatus 1300, for performing the above-described methods. For example, the non-transitory computer-readable storage medium may be a ROM, a RAM, a CD-ROM, a magnetic tape, a floppy disc, an optical data storage device, and the like.

## Claims

1. A control method for adjusting a shooting function, comprising:
upon detecting an initialization of a function of a shooting application, initializing (101) a detection of whether a preset touch control operation is received on a preset touch control region for switching an operation status of an element relating to shooting of an operating interface of the shooting application on a display screen, the preset touch control region being configured as a region for easing an operation performed by a single hand holding a terminal, the touch control region being a right side region along the vertical direction of the display screen, a left side region along the vertical direction of the display screen, and/or a lower side region along the horizontal direction of the display screen; and
if it is determined that the touch control operation is received on the touch control region, switching (102) an operation status of the element in the shooting application according to preset control information, the element being a flashing light or a camera,
**characterized in that**
the touch control region comprises one region,
the preset control information comprises: a correspondence between the touch control operation and said the element, and a switching order corresponding to a plurality of operation status of said element; and,
the step (102) of switching an operation status of said element in the shooting application according to preset control information comprises:
acquiring (201) the element corresponding to the touch control operation according to the touch control operation and the correspondence; and,
switching (202) among the plurality of operation status corresponding to the acquired element according to the switching order corresponding to the element.

2. The method according to claim 1, wherein if the element is a camera, the step (102) of switching an operation status of an element in the shooting application according to preset control information comprises:
switching the operation status of the camera into front camera shooting or rear camera shooting according to the preset control information.

3. The method according to claim 1, wherein if the element is a flashing light, the step (102) of switching an operation status of an element in the shooting application according to preset control information comprises:
switching the operation status of the flashing light into ON, OFF, or AUTO according to preset control information.

4. The method according to claim 1, wherein if the element is a front camera, the step (102) of switching an operation status of an element in the shooting application according to preset control information comprises:
switching the operation status of the front camera into photo shooting or video shooting according to the preset control information.

5. The method according to claim 1, wherein if the element is a rear camera, the step (102) of switching an operation status of an element in the shooting application according to preset control information comprises:
switching the operation status of the rear camera into photo shooting or video shooting according to the preset control information.

6. A control device for adjusting a shooting function, comprising:
a detecting module (11) configured to, upon detecting an initialization of a function of a shooting application, initialize a detection of whether a preset touch control operation is received on a preset touch control region for switching an operation status of an element relating to shooting of an operating interface of the shooting application on a display screen, the preset touch control region being configured as a region for easing an operation performed by a single hand holding a terminal, the touch control region being a right side region along the vertical direction of the display screen, a left side region along the vertical direction of the display screen, and/or a lower side region along the horizontal direction of the display screen; and
a control module (12) configured to, if it is determined that the touch control operation is received on the touch control region, switch an operation status of an element in the shooting application according to preset control information, the element being a flashing light or a camera,
**characterized in that**:
the touch control region comprises one region,
the preset control information comprises: a correspondence between the touch control operation and said the element, and a switching order corresponding to a plurality of operation status of said the element; and
the control module (12) comprises:
a first acquiring unit (121), configured to acquire the element corresponding to the touch control operation according to the touch control operation and the correspondence; and
a first switching unit (122), configured to switch among the plurality of operation status corresponding to the acquired element according to the switching order corresponding to the element.

7. The device according to claim 6, wherein if the element is a camera, the control module (12) is configured to perform:
a switching of the operation status of the camera into front camera shooting or rear camera shooting according to the preset control information.

8. The device according to claim 6, wherein if the element is a flashing light the control module (12) is configured to perform:
a switching of the operation status of the flashing light into ON, OFF, or AUTO according to preset control information.

9. The device according to claim 6, wherein if the element is a front camera, the control module (12) is configured to perform:
a switching of the operation status of the front camera into photo shooting or video shooting according to the preset control information.

10. The device according to claim 6, wherein if the element is a rear camera, the control module (12) is configured to perform:
a switching of the operation status of the rear camera into photo shooting or video shooting according to the preset control information.

## Patentansprüche

1. Steuerungsverfahren zum Einstellen einer Aufnahmefunktion, umfassend:
beim Detektieren einer Initialisierung einer Funktion einer Aufnahmeanwendung, Initialisieren (101) einer Detektion, ob eine voreingestellte Berührungssteuerungsbetätigung auf einer voreingestellten Berührungssteuerungsregion zum Schalten eines Betriebszustands eines mit dem Aufnehmen verbundenen Elements einer Betätigungsschnittstelle der Aufnahmeanwendung auf einem Anzeigebildschirm empfangen wird, wobei die voreingestellte Berührungssteuerungsregion als eine Region zum Erleichtern einer Betätigung ausgestaltet ist, die von einer einzigen Hand durchgeführt wird, die ein Endgerät hält, wobei die Berührungssteuerungsregion eine Region auf der rechten Seite entlang der vertikalen Richtung des Anzeigebildschirms, eine Region auf der linken Seite entlang der vertikalen Richtung des Anzeigebildschirms und/oder eine Region auf der unteren Seite entlang der horizontalen Richtung des Anzeigebildschirms ist, und
wenn bestimmt wird, dass die Berührungssteuerungsbetätigung auf der Berührungssteuerungsregion empfangen wird, Schalten (102) eines Betriebszustands des Elements in der Aufnahmeanwendung gemäß voreingestellten Steuerungsinformationen, wobei das Element ein Blitzlicht oder eine Kamera ist,
**dadurch gekennzeichnet, dass**
die Berührungssteuerungsregion eine Region umfasst,
die voreingestellten Steuerungsinformationen umfassen: eine Entsprechung zwischen der Berührungssteuerungsbetätigung und dem Element und eine Schaltreihenfolge, die mehreren Betriebszuständen des Elements entspricht, und
der Schritt (102) des Schaltens eines Betriebszustands des Elements in der Aufnahmeanwendung gemäß voreingestellten Steuerungsinformationen umfasst:
Erfassen (201) des Elements, das der Berührungssteuerungsbetätigung entspricht, gemäß der Berührungssteuerungsbetätigung und der Entsprechung, und
Schalten (202) unter den mehreren Betriebszuständen, die dem erfassten Element entsprechen, gemäß der Schaltreihenfolge, die dem Element entspricht.

2. Verfahren nach Anspruch 1, wobei, wenn das Element eine Kamera ist, der Schritt (102) des Schaltens eines Betriebszustands eines Elements in der Aufnahmeanwendung gemäß voreingestellten Steuerungsinformationen umfasst:
Schalten des Betriebszustands der Kamera in Frontkameraaufnahme oder Rückkameraaufnahme gemäß den voreingestellten Steuerungsinformationen.

3. Verfahren nach Anspruch 1, wobei, wenn das Element ein Blitzlicht ist, der Schritt (102) des Schaltens eines Betriebszustands eines Elements in der Aufnahmeanwendung gemäß voreingestellten Steuerungsinformationen umfasst:
Schalten des Betriebszustands des Blitzlichts in EIN, AUS oder AUTO gemäß voreingestellten Steuerungsinformationen.

4. Verfahren nach Anspruch 1, wobei, wenn das Element eine Frontkamera ist, der Schritt (102) des Schaltens eines Betriebszustands eines Elements in der Aufnahmeanwendung gemäß voreingestellten Steuerungsinformationen umfasst:
Schalten des Betriebszustands der Frontkamera in Fotoaufnahme oder Videoaufnahme gemäß den voreingestellten Steuerungsinformationen.

5. Verfahren nach Anspruch 1, wobei, wenn das Element eine Rückkamera ist, der Schritt (102) des Schaltens eines Betriebszustands eines Elements in der Aufnahmeanwendung gemäß voreingestellten Steuerungsinformationen umfasst:
Schalten des Betriebszustands der Rückkamera in Fotoaufnahme oder Videoaufnahme gemäß den voreingestellten Steuerungsinformationen.

6. Steuerungsvorrichtung zum Einstellen einer Aufnahmefunktion, umfassend:
ein Detektionsmodul (11), das dazu ausgestaltet ist, bei der Detektion einer Initialisierung einer Funktion einer Aufnahmeanwendung eine Detektion zu initialisieren, ob eine voreingestellte Berührungssteuerungsbetätigung auf einer voreingestellten Berührungssteuerungsregion zum Schalten eines Betriebszustands eines mit dem Aufnehmen verbundenen Elements einer Betätigungsschnittstelle der Aufnahmeanwendung auf einem Anzeigebildschirm empfangen wird, wobei die voreingestellte Berührungssteuerungsregion als eine Region zum Erleichtern einer Betätigung ausgestaltet ist, die von einer einzigen Hand durchgeführt wird, die ein Endgerät hält, wobei die Berührungssteuerungsregion eine Region auf der rechten Seite entlang der vertikalen Richtung des Anzeigebildschirms, eine Region auf der linken Seite entlang der vertikalen Richtung des Anzeigebildschirms und/oder eine Region auf der unteren Seite entlang der horizontalen Richtung des Anzeigebildschirms ist, und
ein Steuerungsmodul (12), das dazu ausgestaltet ist, wenn bestimmt wird, dass die Berührungssteuerungsbetätigung auf der Berührungssteuerungsregion empfangen wird, einen Betriebszustand eines Elements in der Aufnahmeanwendung gemäß voreingestellten Steuerungsinformationen zu schalten, wobei das Element ein Blitzlicht oder eine Kamera ist,
**dadurch gekennzeichnet, dass**:
die Berührungssteuerungsregion eine Region umfasst,
die voreingestellten Steuerungsinformationen umfassen: eine Entsprechung zwischen der Berührungssteuerungsbetätigung und dem Element, und eine Schaltreihenfolge, die mehreren Betriebszuständen des Elements entspricht, und
das Steuerungsmodul (12) umfasst:
eine erste Erfassungseinheit (121), die dazu ausgestaltet ist, das Element, das der Berührungssteuerungsbetätigung entspricht, gemäß der Berührungssteuerungsbetätigung und der Entsprechung zu erfassen, und
eine erste Schalteinheit (122), die dazu ausgestaltet ist, unter den mehreren Betriebszuständen, die dem erfassten Element entsprechen, gemäß der Schaltreihenfolge, die dem Element entspricht, zu schalten.

7. Vorrichtung nach Anspruch 6, wobei, wenn das Element eine Kamera ist, das Steuerungsmodul (12) dazu ausgestaltet ist, durchzuführen:
ein Schalten des Betriebszustands der Kamera in Frontkameraaufnahme oder Rückkameraaufnahme gemäß den voreingestellten Steuerungsinformationen.

8. Vorrichtung nach Anspruch 6, wobei, wenn das Element ein Blitzlicht ist, das Steuerungsmodul (12) dazu ausgestaltet ist, durchzuführen:
ein Schalten des Betriebszustands des Blitzlichts in EIN, AUS oder AUTO gemäß voreingestellten Steuerungsinformationen.

9. Vorrichtung nach Anspruch 6, wobei, wenn das Element eine Frontkamera ist, das Steuerungsmodul (12) dazu ausgestaltet ist, durchzuführen:
ein Schalten des Betriebszustands der Frontkamera in Fotoaufnahme oder Videoaufnahme gemäß den voreingestellten Steuerungsinformationen.

10. Vorrichtung nach Anspruch 6, wobei, wenn das Element eine Rückkamera ist, das Steuerungsmodul (12) dazu ausgestaltet ist, durchzuführen:
ein Schalten des Betriebszustands der Rückkamera in Fotoaufnahme oder Videoaufnahme gemäß den voreingestellten Steuerungsinformationen.

## Revendications

1. Procédé de commande pour régler une fonction de prise de vue, comprenant :
à la détection d'une initialisation d'une fonction d'une application de prise de vue, l'initialisation (101) d'une détection pour savoir si une opération de commande tactile prédéfinie est reçue sur une région de commande tactile prédéfinie pour commuter un statut d'opération d'un élément relatif à une prise de vue d'une interface d'exploitation de l'application de prise de vue sur un écran d'affichage, la région de commande tactile prédéfinie étant configurée comme une région destinée à faciliter une opération réalisée par une seule main tenant un terminal, la région de commande tactile étant une région latérale droite le long de la direction verticale de l'écran d'affichage, une région latérale gauche le long de la direction verticale de l'écran d'affichage, et/ou une région latérale inférieure le long de la direction horizontale de l'écran d'affichage ; et
s'il est déterminé que l'opération de commande tactile est reçue sur la région de commande tactile, commuter (102) un statut d'opération de l'élément dans l'application de prise de vue selon des informations de commande prédéfinies, l'élément étant une lumière clignotante ou une caméra,
**caractérisé en ce que**
la région de commande tactile comprend une unique région,
les informations de commande prédéfinies comprennent : une correspondance entre l'opération de commande tactile et ledit élément, et un ordre de commutation correspondant à une pluralité de statuts d'opération dudit élément ; et,
l'étape (102) consistant à commuter un statut d'opération dudit élément dans l'application de prise de vue selon des informations de commande prédéfinies comprend :
l'acquisition (201) de l'élément correspondant à l'opération de commande tactile selon l'opération de commande tactile et la correspondance ; et,
la commutation (202) entre la pluralité de statuts d'opération correspondant à l'élément acquis selon l'ordre de commutation correspondant à l'élément.

2. Procédé selon la revendication 1, dans lequel, si l'élément est une caméra, l'étape (102) consistant à commuter un statut d'opération d'un élément dans l'application de prise de vue selon des informations de commande prédéfinies comprend :
la commutation du statut d'opération de la caméra en prise de vue de caméra avant ou en prise de vue de caméra arrière selon les informations de commande prédéfinies.

3. Procédé selon la revendication 1, dans lequel, si l'élément est une lumière clignotante, l'étape (102) consistant à commuter un statut d'opération d'un élément dans l'application de prise de vue selon des informations de commande prédéfinies comprend :
la commutation du statut d'opération de la lumière clignotante sur MARCHE, ARRÊT, ou AUTO selon des informations de commande prédéfinies.

4. Procédé selon la revendication 1, dans lequel, si l'élément est une caméra avant, l'étape (102) consistant à commuter un statut d'opération d'un élément dans l'application de prise de vue selon des informations de commande prédéfinies comprend :
la commutation du statut d'opération de la caméra avant en prise de vue photo ou en prise de vue vidéo selon les informations de commande prédéfinies.

5. Procédé selon la revendication 1, dans lequel, si l'élément est une caméra arrière, l'étape (102) consistant à commuter un statut d'opération d'un élément dans l'application de prise de vue selon des informations de commande prédéfinies comprend :
la commutation du statut d'opération de la caméra arrière en prise de vue photo ou en prise de vue vidéo selon les informations de commande prédéfinies.

6. Dispositif de commande pour régler une fonction de prise de vue, comprenant :
un module de détection (11) configuré pour, à la détection d'une initialisation d'une fonction d'une application de prise de vue, initialiser une détection pour savoir si une opération de commande tactile prédéfinie est reçue sur une région de commande tactile prédéfinie pour commuter un statut d'opération d'un élément relatif à une prise de vue d'une interface d'exploitation de l'application de prise de vue sur un écran d'affichage, la région de commande tactile prédéfinie étant configurée comme une région destinée à faciliter une opération réalisée par une seule main tenant un terminal, la région de commande tactile étant une région latérale droite le long de la direction verticale de l'écran d'affichage, une région latérale gauche le long de la direction verticale de l'écran d'affichage, et/ou une région latérale inférieure le long de la direction horizontale de l'écran d'affichage ; et
un module de commande (12) configuré pour, s'il est déterminé que l'opération de commande tactile est reçue sur la région de commande tactile, commuter un statut d'opération d'un élément dans l'application de prise de vue selon des informations de commande prédéfinies, l'élément étant une lumière clignotante ou une caméra,
**caractérisé en ce que** :
la région de commande tactile comprend une unique région,
les informations de commande prédéfinies comprennent : une correspondance entre l'opération de commande tactile et ledit élément, et un ordre de commutation correspondant à une pluralité de statuts d'opération dudit élément ; et
le module de commande (12) comprend :
une première unité d'acquisition (121), configurée pour acquérir l'élément correspondant à l'opération de commande tactile selon l'opération de commande tactile et la correspondance ; et
une première unité de commutation (122), configurée pour commuter entre la pluralité de statuts d'opération correspondant à l'élément acquis selon l'ordre de commutation correspondant à l'élément.

7. Dispositif selon la revendication 6, dans lequel, si l'élément est une caméra, le module de commande (12) est configuré pour réaliser :
une commutation du statut d'opération de la caméra en prise de vue de caméra avant ou en prise en de vue de caméra arrière selon les informations de commande prédéfinies.

8. Dispositif selon la revendication 6, dans lequel, si l'élément est une lumière clignotante, le module de commande (12) est configuré pour réaliser :
une commutation du statut d'opération de la lumière clignotante sur MARCHE, ARRÊT, ou AUTO selon des informations de commande prédéfinies.

9. Dispositif selon la revendication 6, dans lequel, si l'élément est une caméra avant, le module de commande (12) est configuré pour réaliser :
une commutation du statut d'opération de la caméra avant en prise de vue photo ou en prise de vue vidéo selon les informations de commande prédéfinies.

10. Dispositif selon la revendication 6, dans lequel, si l'élément est une caméra arrière, le module de commande (12) est configuré pour réaliser :
une commutation du statut d'opération de la caméra arrière en prise de vue photo ou en prise de vue vidéo selon les informations de commande prédéfinies.
